# FASCICULE DE BREVET EUROPEEN

(11) **EP 2 210 834 B1**
(45) Date de publication et mention de la délivrance du brevet: **31.07.2013**
(21) Numéro de dépôt: 10150076.7
(22) Date de dépôt: 05.01.2010
(51) Int. Cl.: B65G 57/32

(54) **Procédé et installation de groupage de produits empilables du type étuis et autres**
Verfahren und Anlage zum Zusammenfassen von stapelbaren Produkten vom Typ Etui und anderen
Method and installation for grouping stackable products such as cases and others

(30) Priorité: 06.01.2009 FR 0950048
(43) Date de publication de la demande: 28.07.2010
(73) Titulaire: Sidel Participations, 76930 Octeville sur Mer (FR)
(72) Inventeur: Mougin, Didier, 76930 Octeville sur Mer (FR); Begin, Michel, 76930 Octeville sur Mer (FR); Duchemin, Guillaume, 76930 Octeville sur Mer (FR); Poupon, Christophe, 76930 Octeville sur Mer (FR)
(74) Mandataire: Cabinet Plasseraud

(56) Documents cités:
- EP-A- 0 354 469
- DE-B- 1 264 316
- US-A- 2 324 930

## Description

La présente invention concerne un procédé de groupage de produits empilables ayant une forme parallélépipédique, comme des étuis, des plaquettes ou autres, en vue de leur encaissage, par exemple ; elle concerne également l'installation qui permet la mise en oeuvre de ce procédé.

Un procédé et une installation d'empilage de produits parallélépipédiques sont notamment décrits dans les documents EP 354469 et DE 1 264 316. Dans le document EP 354 469, les produits arrivent sur un convoyeur d'amenée qui met lesdits produits à disposition d'un système de collecte à plateaux séparés formant une sorte de noria élévatrice, lesquels plateaux sont mobiles, après la capture d'un produit, à la fois longitudinalement dans le même sens que celui de l'arrivée desdits produits et verticalement, vers le haut. Des moyens de capture permettent de dégager chaque produit par rapport à son plateau et de le faire prendre en charge par un convoyeur qui voit sa pile se former au fur et à mesure de la capture desdits produits. Les produits se déposent les uns sur les autres, formant un lot qui est évacué par le convoyeur de prise en charge. Dans le document DE 1 264 316; qui correspond au préambule du procédé de la revendication 1 et au préambule de l'installation de la revendication 7, un collecteur, comportant des alvéoles superposées, est animé d'un mouvement de montée pour capter les produits sur un tapis convoyeur et d'un mouvement de descente pour reprendre la position de départ après la vidange desdites alvéoles. La vidange des alvéoles est réalisée au moyen d'un peigne à mouvement transversal et, pendant cette opération de vidange et le mouvement de descente, les produits sont stoppés sur le tapis du convoyeur par une butée.

L'invention propose un procédé de groupage de produits pour former un lot en vue de son conditionnement dans une caisse, et ce procédé peut être mis en oeuvre dans une installation compacte, relativement simple et surtout dotée de grandes capacités en matière de polyvalence, de flexibilité.

En fait, ce procédé et l'installation pour sa mise en oeuvre, permettent d'envisager l'utilisation d'un collecteur d'une grande simplicité, du type de celui décrit dans le document DE 1 264 316 précité, facile à changer et surtout d'un coût extrêmement modeste, ce qui permet de réaliser, sans contraintes, des outillages bien adaptés à chaque type de produits à regrouper.

De plus ce procédé permet de raccourcir, au niveau de l'installation, la longueur du circuit suivi par les produits et donc de réduire les risques d'altération de ces derniers par frottements, notamment, sur des guides et autres.

L'installation se positionne directement en sortie de l'unité de préparation des produits. Elle peut aussi se présenter comme un véritable accessoire et n'être utilisée que pour des travaux spécifiques, pour certains types de produits ; le reste du temps elle peut être désactivée, shuntée, ce qui n'est pas le cas pour les installations décrites dans les documents précités.

Le procédé de groupage selon l'invention est détaillé dans la revendication 1 ; il permet de former un lot de produits empilables du genre étuis, plaquettes ou autres, en vue d'une prise en charge par des moyens appropriés pour en réaliser le conditionnement, lesquels produits arrivent en ligne sur un premier convoyeur d'alimentation qui a une fonction d'accumulation et une fonction de distribution desdits produits, laquelle distribution s'effectue de façon séquentielle pour alimenter un convoyeur d'amenée qui met lesdits produits à disposition en vue de leur capture;

Selon un premier mode de réalisation, le procédé consiste à garnir le convoyeur d'amenée puis à l'arrêter pendant au moins le temps de capture de tout ou partie de la quantité de produits qu'il porte.

Selon un autre mode de réalisation le procédé consiste à capter les produits à la volée sur le convoyeur d'amenée qui est gavé de façon continue par le convoyeur d'alimentation et qui avance lui-même de façon continue avec les produits à capter.

Selon le premier mode de réalisation de l'invention, le procédé de groupage de produits consiste : - à détecter la présence d'un produit en amont du collecteur, - à arrêter le convoyeur d'amenée dès que le premier produit a été capté par le collecteur, - à déplacer le collecteur verticalement et ensuite longitudinalement pour réaliser la capture des produits suivants et, après la capture du dernier produit disposé en amont dudit convoyeur d'amenée, - à ramener ledit collecteur vers l'aval dudit convoyeur d'amenée, - à entraver, sur le parcours retour, le passage desdits produits captés, au moyen d'une structure disposée au poste de prise en charge, laquelle structure comprend une sole et un dosseret qui constitue une entrave sur le parcours retour du collecteur, lesquels produits captés s'empilent sur ladite sole, retenus par ledit dosseret, simultanément au mouvement de retour dudit collecteur,- à remettre le convoyeur d'amenée en mouvement pour le charger à nouveau avec les produits à capter.

Selon le second mode de réalisation qui consiste à capter les produits à la volée sur un convoyeur d'amenée qui avance de façon continue avec les produits, le procédé consiste, après la dernière capture de produits sur le convoyeur d'amenée, - à déplacer verticalement puis horizontalement le collecteur pour amener sa capture au niveau du poste de prise en charge, puis,- à amener une entrave sur le parcours retour dudit collecteur en association avec ledit poste de prise en charge, et - à mettre ledit collecteur en mouvement de retour dans le sens d'avancement du convoyeur d'amenée, lequel mouvement provoque, sous l'action de ladite entrave, une vidange automatique dudit collecteur, et - à animer ledit collecteur d'un mouvement retour à une vitesse supérieure à celle dudit convoyeur d'amenée pour remonter la file de produits à capter, disposés sur ce dernier et reprendre sa position de départ de capture desdits produits.

Selon une variante de ce second mode de réalisation, après la capture des produits et le déplacement vertical du collecteur pour ne pas entraver le passage des produits qui sont disposés sur le convoyeur d'amenée, le procédé consiste - à amener ledit collecteur entre un poste de prise en charge disposé latéralement et une structure de vidange en forme de peigne complémentaire audit collecteur, - à animer ladite structure de vidange d'un mouvement transversal, par rapport au mouvement longitudinal du collecteur, et pendant l'arrêt de ce dernier , - à transférer les produits captés vers ledit poste de prise en charge et, - à remettre ledit collecteur à son point de départ.

L'invention concerne également l'installation qui est détaillée dans la revendication 7.

Selon un premier mode de réalisation, le poste de prise en charge des produits est situé sur le parcours retour du collecteur et les moyens de déchargement dudit collecteur sont constitués d'un dosseret, lequel dosseret entrave le parcours des produits lors dudit mouvement de retour dudit collecteur, lesquels produits se déposent automatiquement sur la sole du poste de prise en charge, sous la forme d'une pile de produits.

Toujours selon ce premier mode de réalisation, le collecteur est constitué d'un peigne qui circule entre deux convoyeurs d'amenée des produits, lequel collecteur capte les produits dans leur partie médiane centrale et dépose ces produits au poste de prise en charge qui est constitué de deux soles disposées chacune respectivement au-dessus desdits convoyeurs d'amenée, lesquels produits reposent, par leurs extrémités, sur chaque sole.

Toujours selon l'invention, le déchargement du collecteur s'effectue, au niveau du poste de prise en charge, au moyen d'une paire de dosserets qui entravent le passage des produits lors du mouvement retour dudit collecteur, lequel collecteur passe entre les deux dosserets et entre les deux soles, laissant les produits au niveau dudit poste de prise en charge, sous la forme d'une pile apte à être prélevée par des moyens appropriés du genre robots ou autres.

Selon un autre mode de réalisation les produits sont disposés en travers sur un convoyeur d'amené unique et le collecteur est constitué de deux peignes disposés de part et d'autre de ce convoyeur d'amenée, pour capter les produits au niveau de leurs extrémités ; lesdits produits étant transportés au moyen du convoyeur d'amenée au niveau de leur partie centrale médiane.

Selon un premier mode de réalisation de l'invention, dans le cas d'un collecteur comportant deux peignes qui encadrent le convoyeur d'amenée des produits, l'installation comprend un poste de prise en charge disposé au-dessus du niveau des produits situés sur le convoyeur d'amené, sur le parcours retour dudit collecteur, lequel poste de prise en charge comprend - une sole disposée au-dessus et dans l'alignement du convoyeur d'amenée des produits et - des moyens de déchargement dudit collecteur constitués d'un dosseret associé à ladite sole, lequel dosseret entrave le passage des produits, sur le parcours retour du collecteur, lesquels produits se déposent au niveau de leur partie centrale, sur ladite sole, sous la forme d'une pile.

Selon un autre mode de réalisation de l'invention, dans le cas d'un collecteur comprenant deux peignes disposés de part et d'autre du convoyeur d'amenée, lesdits peignes sont portés par des bras qui sont espacés d'une distance supérieure à la dimension des produits, dans leur sens transversal, tels qu'ils sont portés par ledit convoyeur d'amenée.

Toujours selon l'invention, dans le cas de ce collecteur dont les deux peignes sont portés par les bras espacés d'une distance supérieure à la dimension transversale des produits, le poste de prise en charge est disposé au niveau de la partie amont du convoyeur d'amenée, pour accueillir les produits captés avant le mouvement retour dudit collecteur vers le point de départ.

Selon un premier mode de réalisation, le poste de prise en charge comprend une sole disposée au dessus du convoyeur d'amenée et des moyens de déchargement constitués d'une palette amovible qui constitue une entrave pour les produits sur le chemin de retour du collecteur, laquelle palette est mobile dans un plan vertical entre une position inactive qui permet le passage des produits lors du mouvement de remontée de la file, jusqu'au niveau du poste de prise en charge, et une position active dans laquelle la palette se positionne entre les deux peignes, en face de la partie centrale des produits pour décharger ledit collecteur.

Selon un autre mode de réalisation, le poste de prise en charge est disposé dans la partie amont du convoyeur d'amenée, décalé latéralement par rapport au trajet du collecteur et ce poste de prise en charge coopère avec des moyens de déchargement dudit collecteur qui sont constitués d'un dispositif en forme de peigne, complémentaire aux peignes dudit collecteur, lequel dispositif est animé d'un mouvement transversal par rapport au mouvement dudit collecteur pour transférer les produits disposés dans les alvéoles du collecteur sur la sole du poste de prise en charge qui est disposé latéralement, permettant un retour au point de départ, du collecteur, dès l'éjection des produits portés par ce dernier.

Mais l'invention sera encore détaillée à l'aide de la description suivante et des dessins annexés, donnés à titre indicatif, et dans lesquels :
- la figure 1 est une élévation schématique de l'installation selon un premier mode de réalisation dans lequel la capture des produits s'effectue avec un arrêt du convoyeur d' amenée ;
- la figure 2 est une vue selon II-II de la figure 1, montrant un premier mode de réalisation de l'installation, avec un collecteur unique disposé entre deux convoyeurs d' amenée ;
- la figure 3 est une vue selon III-III de la figure 1 montrant une variante de réalisation, dans laquelle le collecteur est constitué de deux peignes qui encadrent un convoyeur d'amenée unique ;
- la figure 4 illustre l'opération de capture des produits sur le convoyeur d'amenée, lequel convoyeur d'amenée est à l'arrêt pendant ladite capture ;
- la figure 5 montre le collecteur après la capture de l'ensemble des produits disposés sur le convoyeur d'amenée, avant le redémarrage de ce dernier ;
- la figure 6 montre le collecteur lors de son mouvement retour, positionné au niveau du poste de prise en charge, avec le convoyeur d'amenée en mouvement, portant à nouveau des produits à capter ;
- la figure 7 montre le collecteur après la dépose des produits captés, au niveau du poste de prise en charge, lequel collecteur se prépare à rejoindre son point de départ pour la capture des produits disposés sur le convoyeur d'amenée, comme illustré figure 1 et figure 4 ;
- la figure 8 est une élévation schématique d'une variante de réalisation de l'invention dans laquelle la capture des produits s'effectue à la volée, en même temps que l'avancement du convoyeur d'amenée des produits ;
- la figure 9 est une vue selon IX-IX de la figure 8, montrant un collecteur constitué de deux peignes qui sont portés par des branches dont l'écartement est supérieur à la dimension transversale des produits à capter ;
- la figure 10 illustre une nouvelle opération de capture des produits sur le convoyeur d'amenée, après la dépose des produits captés antérieurement au niveau du poste de prise en charge où lesdits produits captés se présentent sous la forme d'une pile prête à être enlevée par un dispositif complémentaire du genre robot ou autre ;
- la figure 11 montre l'arrivée du collecteur avec l'ensemble de ses produits captés, au niveau du poste de prise en charge, avant son déchargement au moyen de la palette qui entrave le chemin des produits lors du mouvement de retour dudit collecteur, et sur cette figure, on remarque également le chargement du convoyeur d'amenée pendant cette opération de déchargement du collecteur ;
- la figure 12 est une variante de réalisation de la figure 8, au niveau du poste de prise en charge des produits ;
- la figure 13 est une vue selon XIII-XIII de la figure 12 ;
- la figure 14 montre le collecteur de la figure 12 au niveau du poste de prise en charge, lorsque le collecteur est déchargé de ses produits par un dispositif du genre peigne qui balaye les alvéoles dudit collecteur pour transférer les produits sur le poste de prise en charge qui, comme représenté figure 13, est disposé en dehors du passage dudit collecteur.

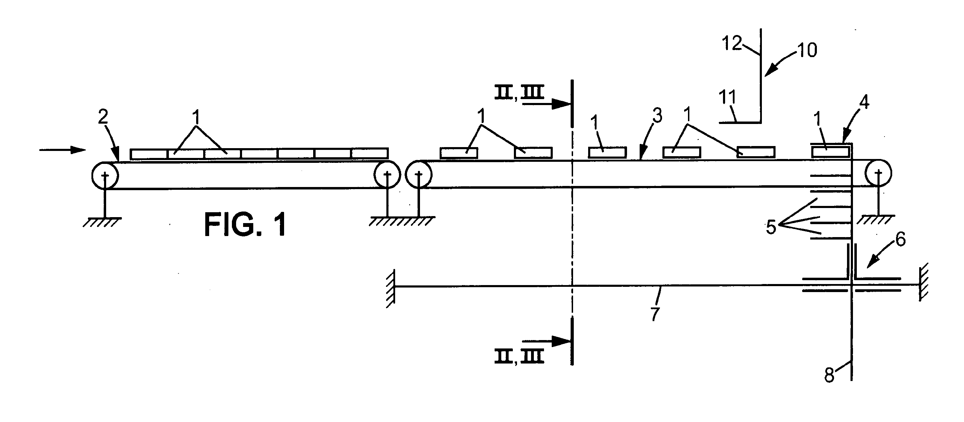

La figure 1 représente, de façon schématique et en élévation, les principaux éléments constitutifs de l'installation qui permettent la mise en oeuvre du procédé de regroupement des produits et, en particulier, des produits 1 qui ont une forme de parallélépipède rectangle allongé comme, par exemple, des étuis, des plaquettes ou autres, lesquels produits 1 présentent, notamment, la particularité de pouvoir s'empiler.

L'installation comprend un premier convoyeur 2, du type à tapis sans fin, qui reçoit les produits 1 provenant d'une machine de préparation non représentée. Ce premier convoyeur 2, appelé convoyeur d'alimentation dans la suite du texte, est suivi d'un convoyeur 3 du type à tapis sans fin également, lequel convoyeur 3 sera appelé convoyeur 3 d'amenée dans la suite du texte.

Le convoyeur 2 d'alimentation a une double fonction : une fonction d'accumulation des produits 1 et une fonction de distribution de ces mêmes produits 1 au convoyeur 3 d'amenée. Ce convoyeur 3 d'amenée évolue à une vitesse qui est supérieure à celle du convoyeur 2 d'alimentation ce qui permet, par un contrôle approprié des vitesses de chacun, d'obtenir un espacement des produits 1 qui se suivent sur ledit convoyeur 3 d'amenée.

Les produits 1 qui sont disposés sur le convoyeur 3 d'amenée sont destinés à être captés par un dispositif de collecte, en forme de peigne, appelé, dans la suite du texte, un collecteur 4. Ce collecteur 4 est disposé transversalement par rapport au sens longitudinal d'avancement des produits 1 qui sont sur le convoyeur 3 d'amenée et il est mobile dans un plan longitudinal vertical, c'est-à-dire un plan qui est perpendiculaire au plan de convoyage desdits produits 1.

Ce collecteur 4 comporte plusieurs alvéoles 5 aménagées pour capter les produits 1 qui sont répartis sur le convoyeur 3 d'amenée. Ces alvéoles 5 sont ouvertes vers l'amont du convoyeur 3 d'amenée ; elles sont superposées et leur nombre est adapté à la pile de produits 1 qui constitue un lot. La forme et les dimensions des alvéoles 5 sont adaptées à celles des produits 1 à capter et en particulier à la section de ces produits 1.

Le collecteur 4 coopère avec un système 6 de glissières qui se situe sous le convoyeur 3 d'amenée ; ce système 6 de glissières permet de réaliser le guidage dudit collecteur 4 dans le plan longitudinal et dans le plan vertical de l'installation.

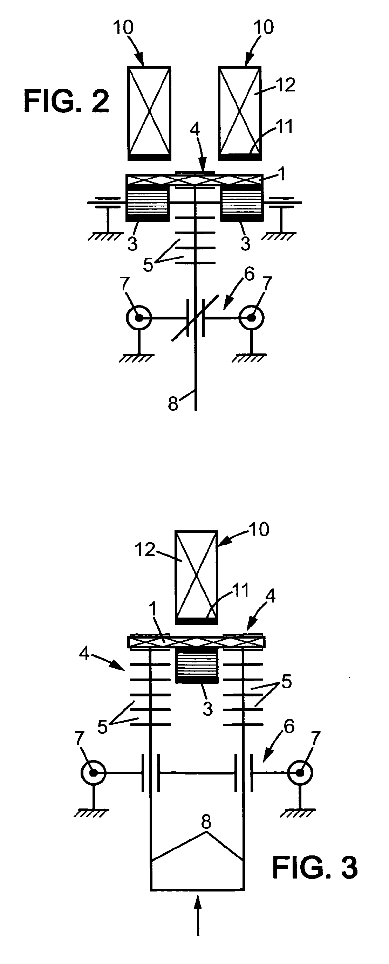

Les moyens de guidage du collecteur dans le plan longitudinal sont, par exemple, en forme de glissières 7, lesquelles glissières sont parallèles au plan et à l'axe longitudinal de convoyage des produits 1. Les moyens qui assurent le guidage vertical du collecteur 4 sont constitués d'un ou de plusieurs bras 8, comme détaillés plus loin en liaison avec les différentes figures 2, 3, 9 et 13, lequel ou lesquels bras 8 faisant office de glissières, par exemple.

On remarque, disposé au dessus du convoyeur 3 d'amenée, dans sa partie aval, un poste 10 de prise en charge qui comprend une sole 11 parallèle au plan de convoyage des produits 1 et un dosseret 12, lequel dosseret est disposé à l'équerre par rapport à ladite sole11 ; ce dosseret 12 constitue une entrave pour les produits 1 qui sont dans les alvéoles 5 du collecteur 4 lors du mouvement de retour de ce dernier et ce dosseret 12 permet de décharger lesdits produits 1 et de les déposer sur ladite sole 11 sous la forme d'une pile.

La figure 2 représente, schématiquement, une vue selon II-II de la figure 1, montrant un mode de réalisation possible du collecteur 4 et du convoyeur 3 d'amenée qui met les produits 1 à disposition dudit collecteur 4.

Le convoyeur 3 d'amenée est constitué de deux convoyeurs 3 qui sont espacés transversalement pour permettre le passage du collecteur 4 lors de son mouvement aller pour la capture des produits disposés sur ledit convoyeur 3 et lors de son mouvement de retour au cours duquel il abandonne les produits au poste 10 de prise en charge.

Les produits 1 sont portés et convoyés au niveau de leurs extrémités par les deux convoyeurs 3 d'amenée. La somme des largeurs du collecteur 4 et des deux convoyeurs 3 d'amenée correspond sensiblement à la dimension transversale des produits 1 et, par exemple, à la largeur du convoyeur 2 d'alimentation.

Le collecteur 4 comporte, par exemple, un seul bras 8 avec un degré de liberté dans le sens vertical et sa largeur est comprise entre le tiers et les deux tiers de la dimension transversale des produits 1.

Au-dessus des deux convoyeurs 3 d'amenée, on trouve deux postes 10 de prise en charge des produits 1 ; ces deux postes 10 sont écartés d'une distance qui est sensiblement supérieure à la largeur du collecteur 4, et ils se situent au-dessus, respectivement, des convoyeurs 3 d'amenée.

La figure 3 représente une variante de réalisation de l'installation dans laquelle les produits 1 sont présentés au collecteur 4 au moyen d'un seul convoyeur 3 d'amenée qui se situe dans le prolongement longitudinal médian du convoyeur 2 d'alimentation.

Le convoyeur 3 d'amenée porte les produits 1 au niveau de leur partie médiane; lesdits produits 1 sont posés en travers sur le tapis sans fin dudit convoyeur 3. La largeur de ce convoyeur 3 d'amenée est, par exemple, comprise entre le tiers et les deux tiers de la dimension transversale des produits 1.

Dans cette configuration, le collecteur 4 est constitué de deux parties qui sont disposées de part et d'autre du convoyeur 3 de mise à disposition. Chaque collecteur 4 coopère, au moyen de ses alvéoles 5, avec les extrémités des produits 1 et, dans cette configuration, on remarque que les deux bras 8 du collecteur 4 sont écartés d'une distance qui est inférieure à la dimension transversale des produits 1.

On remarque également, la présence du poste 10 de prise en charge des produits 1, lequel poste 10 est disposé au-dessus du convoyeur 3 de mise à disposition, et sa largeur est inférieure à l'espace qui règne entre les deux collecteurs 4.

On retrouve aussi, toujours sur cette figure 3, le système de guidage 6 qui comprend les glissières 7 horizontales et deux glissières verticales qui correspondent aux deux bras 8 du collecteur 4.

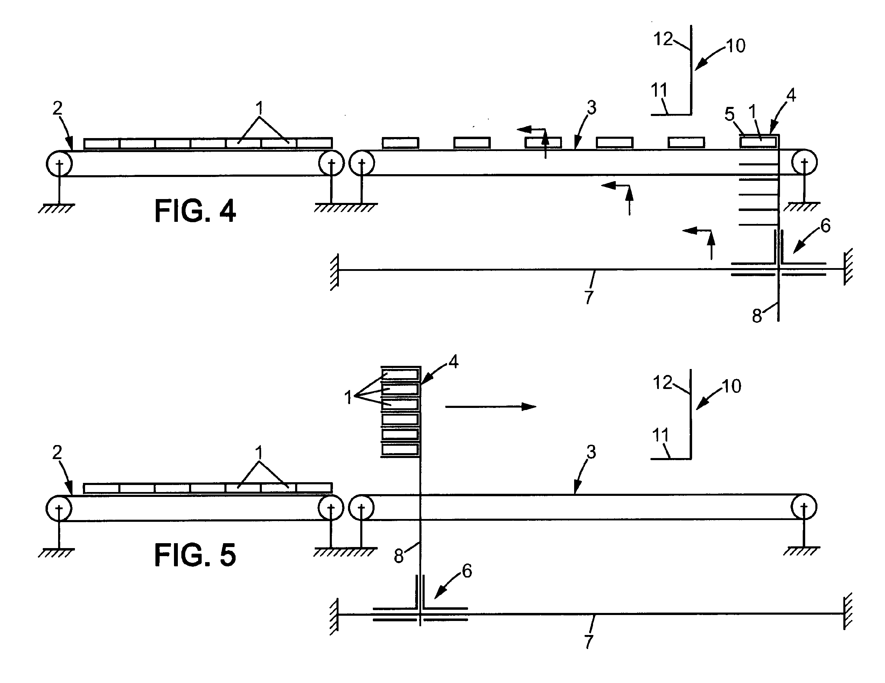

Les figures 4 à 7 montrent l'enchaînement des opérations qui permettent de réaliser un regroupement des produits 1 et de les déposer au niveau du poste 10 de prise en charge.

Sur la figure 4, on retrouve le collecteur 4 dont l'alvéole supérieure 5 est déjà chargée avec un produit 1 qui a été amené par le convoyeur 3 de mise à disposition. Dès que le premier produit 1 est engagé dans l'alvéole 5 du collecteur 4, le convoyeur 3 de mise à disposition s'arrête et ledit collecteur 4 se décale verticalement et horizontalement pour capter le produit 1 suivant qui est en amont ; il se décale verticalement de la hauteur d'une alvéole 5 et horizontalement d'une distance qui correspond à l'espace entre deux produits 1 sur le tapis sans fin dudit convoyeur 3 d'amenée, et ainsi de suite jusqu'au dernier produit 1 situé au niveau de l'amont dudit convoyeur 3.

On remarque la position du poste 10 de prise en charge qui se situe vers la partie aval du convoyeur 3 d'amenée pour permettre le passage des produits 1 sous sa sole 11 au début du mouvement aller du collecteur 4, c'est-à-dire au début de la capture des produits 1 disposés sur ledit convoyeur 3.

La figure 5 montre le collecteur 4 ayant terminé son opération de collecte des produits 1. Arrivé en fin de course, ce collecteur 4 revient en arrière, c'est-à-dire vers l'aval du convoyeur 3 de mise à disposition, pour larguer les différents produits 1 au niveau du poste 10 de prise en charge.

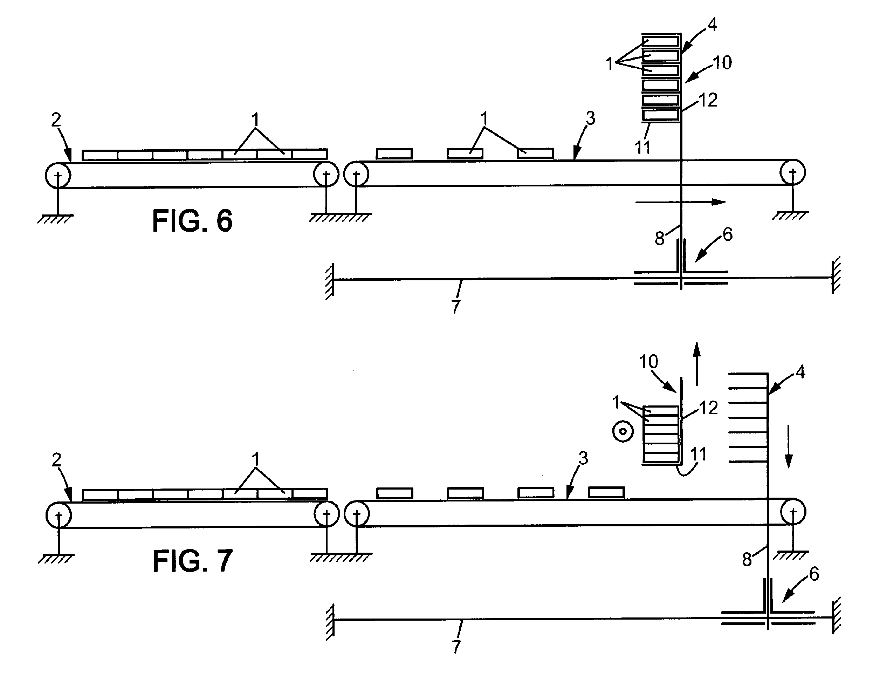

La figure 6 montre le collecteur 4 ayant atteint le poste 10 de prise en charge ; les produits 1 sont arrêtés par le dosseret 12 du poste 10 et, après le dégagement dudit collecteur 4, lesdits produits 1 reposent sur la sole 11 dudit poste 10 sous la forme d'une pile de produits.

On remarque également sur cette figure 6, le réapprovisionnement du convoyeur 3 de mise à disposition avec les produits 1, lequel convoyeur 3 d'amenée a été remis en marche dès le mouvement de retour du collecteur 4, à une vitesse inférieure à celle de ce dernier, par des moyens de commande appropriés, du genre automate. Ce réapprovisionnement du convoyeur 3 d'amenée s'effectue au moyen du convoyeur 2 d'alimentation qui distribue les produits 1 à une certaine vitesse, laquelle vitesse étant inférieure à celle dudit convoyeur 3 d'amenée, pour réaliser automatiquement un espacement régulier entre les produits 1 sur ledit convoyeur 3 d'amenée.

La figure 7 montre la pile constituée du lot de produits 1 ; cette pile est en place au niveau du poste 10 de prise en charge, dans l'attente d'une évacuation par des moyens complémentaires, non représentés. Ce lot de produits 1 empilés peut être évacué transversalement par des moyens appropriés du type poussoir, ou bien être pris en charge par d'autres moyens, comme un robot, pour être transféré un poste d'encaissage, par exemple.

Toujours sur cette figure 7, le collecteur 4 est vide et il est arrivé au niveau de l'extrémité aval du convoyeur 3 d'amenée. Ce convoyeur 3 continue à être chargé en produits 1 par le convoyeur 2 de distribution et, dans le même temps, le collecteur 4 se repositionne, comme représenté figure 4, pour accueillir, en temps voulu, le premier produit 1 qui est amené par ledit convoyeur 3 d'amenée et le cycle reprend comme détaillé auparavant.

Le procédé de regroupage des produits 1 comporte donc plusieurs opérations qui s'enchaînent en vue de réaliser leur conditionnement sous la forme de lots, lesquels produits arrivent en ligne sur le convoyeur 2 d'alimentation qui a une fonction d'accumulation et une fonction de distribution desdits produits, laquelle distribution s'effectue de façon séquentielle pour alimenter le convoyeur 3 d'amenée qui met lesdits produits à disposition d'un collecteur 4 en vue de leur capture ; dans ce premier mode de réalisation, le convoyeur 3 d'amenée est à l'arrêt pendant au moins le temps de capture de tout ou partie de la quantité de produits qu'il porte, et le procédé consiste :
- à capter les produits répartis sur ledit convoyeur 3 d'amenée au moyen du collecteur 4 qui est disposé transversalement par rapport au sens longitudinal d'avancement desdits produits sur ledit convoyeur 3 d'amenée, et ce collecteur 4 est mobile dans un plan vertical,
- à déposer les produits, qui viennent d'être captés, au niveau du poste 10 de prise en charge qui se situe au-dessus du niveau dudit convoyeur 3 d'amenée,
- à animer ledit collecteur 4 d'un mouvement en boucle, cyclique, qui comprend plusieurs phases : une phase de capture, une phase de dépose et une phase de retour, ladite phase de capture se décompose en un mouvement vertical de montée et un mouvement longitudinal d'avance opposé au sens d'avancement dudit convoyeur 3 d'amenée des produits et ladite phase de retour se décompose en un mouvement longitudinal dans le sens d'avance dudit convoyeur 3 d'amenée des produits et un mouvement vertical de descente,

- à déclencher la phase de capture des produits en prenant en compte des informations comme la position desdits produits sur ledit convoyeur 3 d'amenée par rapport audit collecteur 4 et, selon le cas, la vitesse dudit convoyeur 3 d'amenée,
- à organiser la phase de dépose par une opération de vidange de l'ensemble des produits formant le lot qui se trouve dans le collecteur 4 et par une opération simultanée de transfert de cette vidange sur la sole 11 d'accueil où ledit lot prend la forme d'une pile de produits, laquelle opération de vidange consiste à entraver le parcours des produits au moyen du dosseret 12 qui permet une dépose desdits produits sur ladite sole 11,
- et, simultanément au mouvement de retour dudit collecteur (4), à remettre le convoyeur (3) d'amenée en mouvement pour le charger à nouveau avec les produits à capter.

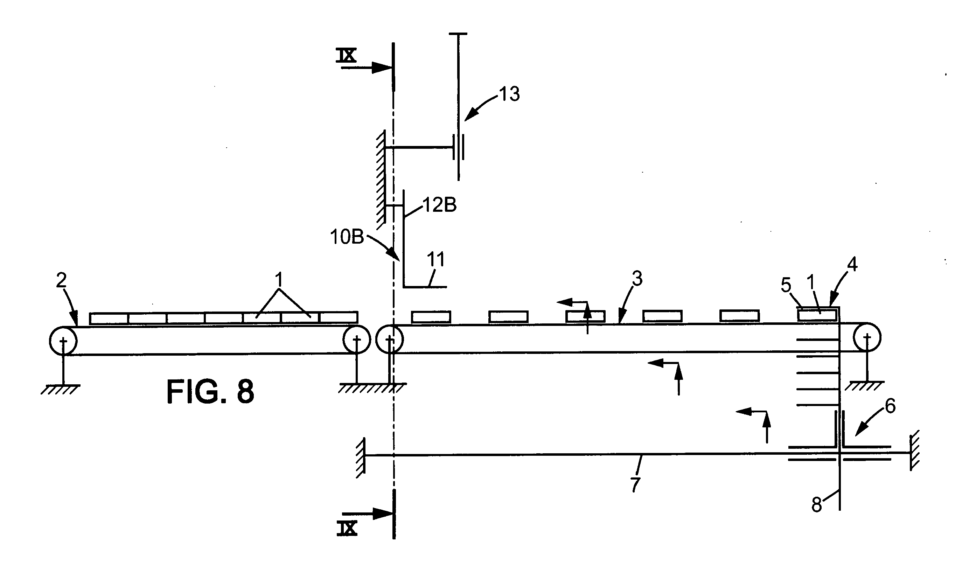

La figure 8 montre une variante de réalisation de l'installation qui permet de réaliser la capture de produits 1, à la volée sur le convoyeur 3 d'amenée, sans avoir à arrêter ce convoyeur pendant l'opération de capture desdits produits 1.

Le collecteur 4 et son système de guidage 6 restent identiques.

La variante de réalisation porte sur le poste 10 de prise en charge qui se situe au niveau de l'extrémité amont du convoyeur 3 d'amenée, ce poste 10B de prise en charge comporte une sole 11 qui est disposée, comme précédemment, au-dessus du convoyeur 3 d'amenée, parallèlement au plan de circulation des produits 1. En amont de cette sole 11, on remarque une paroi 12B qui fait office de guide pour le calage des produits 1 et en particulier de la pile de produits 1 lorsque ces derniers sont déposés sur la sole 11.

Le collecteur 4 se positionne au niveau du poste 10B de prise en charge en fin de course, lorsqu'il a terminé la capture des différents produits 1. Pour vidanger les alvéoles 5 du collecteur 4, le poste 10B de prise en charge comporte des moyens qui constituent une entrave pour les produits 1 situés dans ledit collecteur 4 lorsque ce dernier amorce son mouvement de retour vers l'aval du convoyeur 3 d'amenée. Ces moyens d'entrave sont constitués d'une palette 13 qui est mobile verticalement, manoeuvrée par des moyens appropriés, pour se positionner derrière les produits 1 lorsque le collecteur 4 est positionné au niveau du poste 10B de prise en charge. Cette palette 13 permet de vidanger les alvéoles 5 du collecteur lors du mouvement de retour de ce collecteur 4, vers sa position de départ.

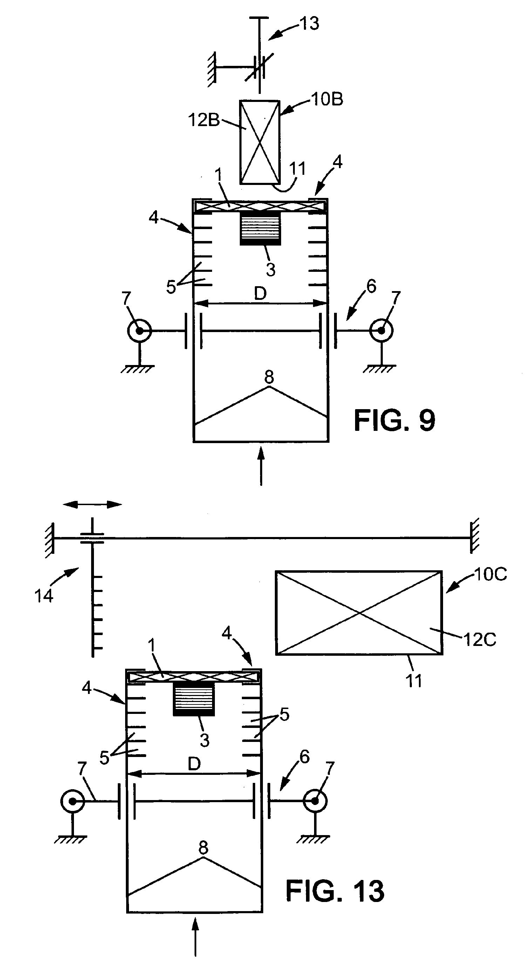

La figure 9 est une vue selon IX-IX de la figure 8. Dans ce mode de réalisation, les produits 1 sont disposés transversalement, sur le convoyeur 3 d'amenée et ce convoyeur 3 est disposé entre les deux peignes du collecteur 4.

La distance D qui sépare les deux bras 8 du collecteur 4 est supérieure à la dimension transversale des produits 1. Cet espace entre les deux bras 8 est suffisant pour permettre le passage desdits produits 1, portés par le convoyeur 3 d'amenée, lorsque le collecteur 4 se situe au niveau du poste 10B de prise en charge, pendant la phase de déchargement.

Cet aménagement du collecteur permet au convoyeur 3 d'amenée des produits de fonctionner de façon continue et de se garnir avec des produits 1 pendant que ledit collecteur 4 se prépare à décharger les produits 1 qui sont dans les alvéoles 5, au niveau du poste 10B de prise en charge. Le collecteur 4, comme montré plus loin, est animé d'un mouvement de recul pour retourner au point de départ de la capture des produits 1 ; lors de ce retour, ledit collecteur 4 est animé d'une accélération et d'une vitesse appropriées pour atteindre le point de départ de capture avant l'arrivée du premier produit 1 qui est amené par la convoyeur 3.

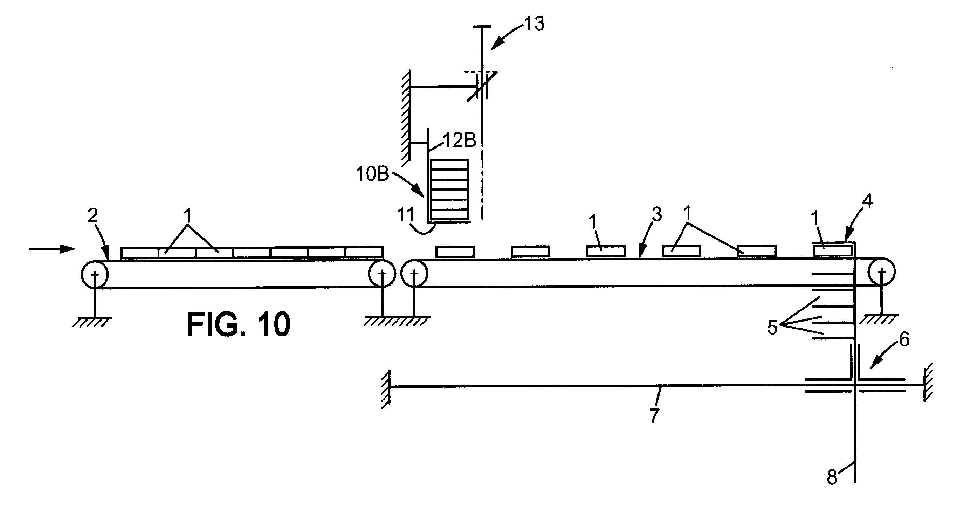

La figure 10 montre le collecteur 4 en position de capture du premier produit 1 disposé sur le convoyeur 3 d'amenée. Partant de cette position, le collecteur 4 est soumis à un mouvement de déplacement vertical pour présenter l'ouverture de son alvéole 5 au produit 1 suivant et, il est animé d'un mouvement longitudinal de remontée de la file des produits 1 disposés sur ledit convoyeur 3 d'amenée.

Sur cette figure 10, on remarque la pile de produits 1 qui vient d'être déposée par le collecteur 4 au niveau du poste 10B de prise en charge. La palette 13 est représentée en position inactive escamotée en traits forts et elle est également représentée, dans sa position active de retenue des produits 1, en traits mixtes fins.

Les produits 3 qui sont disposés sous la forme d'une pile au niveau du poste 10 de prise en charge sont repris par des moyens appropriés du genre robots, non représentés. Ils peuvent également être transférés latéralement au moyen d'un poussoir, non représenté, vers un poste d'encaissage ou vers un poste complémentaire.

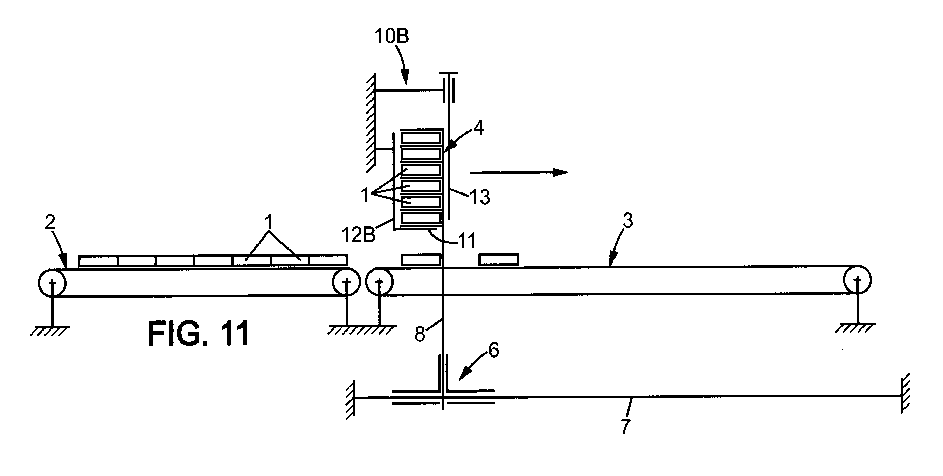

La figure 11 montre le collecteur 4 en fin de course, après avoir rempli ses différentes alvéoles avec des produits 1. En fin de course, ce collecteur 4 est positionné au niveau du poste 10B de prise en charge des produits 1. On remarque la mise en position active de la palette 13, en aval du collecteur 4. Cette palette 13, qui se situe au-dessus du convoyeur 3 d'amenée, se situe également entre les peignes du collecteur 4, ce qui permet audit collecteur 4 d'effectuer son mouvement de retour et, simultanément, d'abandonner les différents produits 1 qui s'amassent, sous la forme d'une pile, sur la sole 11 au niveau du poste 10B de prise en charge.

Toujours sur cette figure 11, on remarque que le convoyeur 3 d'amenée commence à se charger avec des produits 1 qui sont espacés, pendant que le collecteur 4 se décharge de son lot de produits 1 au niveau du poste 10B de prise en charge.

Le collecteur 4 effectue un mouvement de recul pour retourner à son point d'origine de capture des produits, comme représenté figure 8, avec un mouvement dont l'accélération et la vitesse sont aménagées pour remonter la file de produits 1 qui est déjà positionnée sur le convoyeur 3 d'amenée et se remettre en position active de capture de ces différents produits 1.

Dans ce mode de réalisation, le procédé de groupage des produits consiste à capter lesdits produits 1 à la volée sur le convoyeur 3 d'amenée qui est gavé de façon continue par le convoyeur 2 d'alimentation et qui avance lui-même de façon continue avec les produits à capter.

Le procédé consiste aussi : - à détecter la présence d'un produit en amont du collecteur 4, - à déplacer le collecteur 4 verticalement et ensuite longitudinalement pour réaliser la capture des produits suivants et, après la capture du dernier produit disposé en amont dudit convoyeur 3 d'amenée, - à déplacer verticalement puis horizontalement ledit collecteur 4 pour amener sa capture au niveau du poste 10B de prise en charge, puis à amener une entrave en forme de palette 13 sur le parcours retour dudit collecteur 4 et à mettre ledit collecteur 4 en mouvement de retour dans le sens d'avancement dudit convoyeur 3 d'amenée, lequel mouvement provoque une vidange automatique dudit collecteur 4, et à animer ledit collecteur 4 d'un mouvement retour à une vitesse supérieure à celle dudit convoyeur 3 d'amenée pour remonter la file de produits à capter disposés sur ce dernier et reprendre sa position de départ de capture desdits produits.

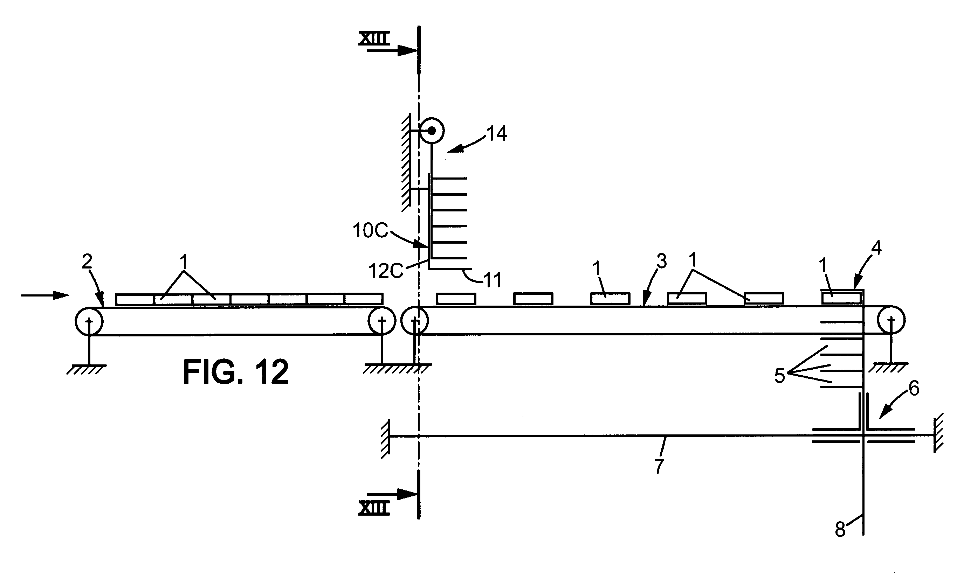

La figure 12 représente une variante de réalisation de l'installation.

Dans ce mode de réalisation on retrouve le poste 10 de prise en charge qui se situe au niveau de la partie amont du convoyeur 3 d'amenée. Ce poste 10C de prise en charge est disposé latéralement, décalé par rapport à la trajectoire du collecteur 4, comme représenté figure 13. Ce poste 10C de prise en charge comporte, comme précédemment, une sole 11 qui permet d'accueillir les produits 1 sous la forme d'une pile et il comporte également une paroi 12C qui fait office de paroi guide pour les produits 1 lors de leur dépose par le collecteur 4. Ce poste 10C de prise en charge peut également avoir une section en forme de U et former une sorte de gouttière pour les produits 1, laquelle gouttière peut avoir une longueur, dans le sens transversal qui permet de loger plusieurs lots de produits les uns à la suite des autres et ces lots sont repris, comme précédemment par des moyens appropriés du genre robot, par exemple.

Les produits 1 sont pris en charge par le collecteur 4, comme détaillé en liaison avec la figure 13, par les deux peignes latéraux dudit collecteur 4. Ces produits 1 sont pris en charge au niveau de leurs extrémités et la distance D entre les bras 8 qui portent les peignes du collecteur 4 est, là aussi, supérieure à la dimension transversale des produits 1 pour former une sorte de fenêtre qui permet à ces produits 1 de continuer à circuler, entraînés par le convoyeur d'amenée 3, pendant la phase de déchargement des produits 1 au niveau du poste 10C de prise en charge.

Pour décharger le collecteur 4, le poste 10C de prise en charge comporte une structure complémentaire qui comprend un dispositif 14 en forme de peigne également. Ce dispositif 14 en forme de peigne est complémentaire du peigne du collecteur 4, lequel dispositif 14 est mobile transversalement, actionné par des moyens appropriés, pour vider chaque alvéole du collecteur 4. Ce dispositif 14 est mobile transversalement sur une longueur qui correspond au moins à la dimension transversale des produits 1.

Dans le mode de réalisation précédent, représenté figure 9, le collecteur 4 peut amorcer son mouvement de recul dès la mise en place de la palette 13. Dans le mode de réalisation représenté figure 13, le collecteur 4 ne peut amorcer son mouvement de recul qu'après avoir été déchargé de tous ses produits 1 par le dispositif 14 qui a transféré lesdits produits 1 au niveau du poste 10C de prise en charge ; dés qu'il est déchargé, le collecteur 4 peut se mettre en mouvement pour rejoindre son point de départ et le dispositif 14 retourne lui aussi à son point de départ, c'est-à-dire de l'autre côté du convoyeur 3 d'amenée par rapport au côté de la sole 11.

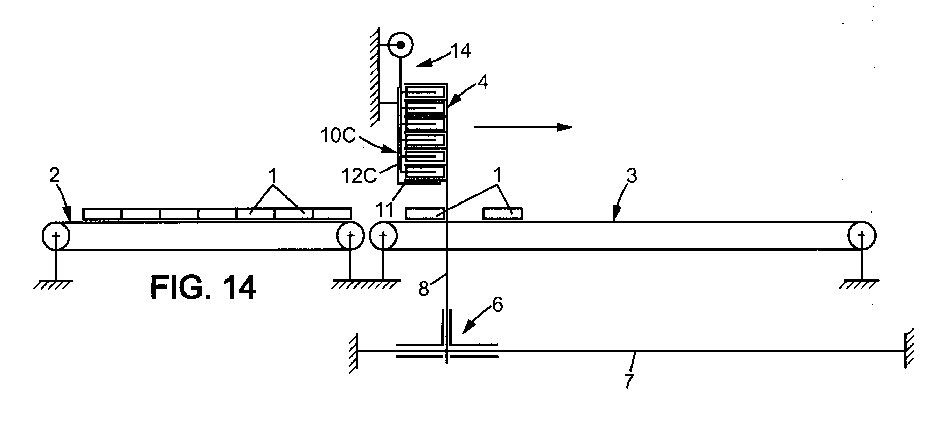

La figure 14 montre le collecteur 4 en fin de course de capture des produits 1, avec toutes ses alvéoles remplies de ces produits 1, lequel collecteur 4 est positionné au niveau du poste 10C de prise en charge, sur le côté de la sole 11. Dans cette position le dispositif 14 est mis en mouvement par des moyens appropriés pour effectuer un mouvement transversal de déchargement et de transfert des produits 1 vers la sole 11 de ce poste 10C de prise en charge. Les différents produits 1 sont poussés par les dents du dispositif 14, lesquelles dents se situent dans la partie médiane des alvéoles 5 du collecteur 4.

Dans ce dernier mode de réalisation, le procédé consiste, après la capture des produits et le déplacement vertical du collecteur 4, pour ne pas entraver le passage des produits qui sont disposés sur le convoyeur 3 d'amenée, à amener ledit collecteur 4 entre le poste 10C de prise en charge disposé latéralement et un dispositif 14 de vidange en forme de peigne dont la forme est complémentaire à celle dudit collecteur 4, à animer ledit dispositif 14 d'un mouvement transversal, par rapport au mouvement longitudinal du collecteur 4, et pendant l'arrêt de ce dernier , à transférer les produits captés vers ledit poste 10C de prise en charge et à remettre ledit collecteur à son point de départ.

## Revendications

1. Procédé de groupage de produits empilables du genre étuis, plaquettes ou autres, en vue d'une prise en charge par des moyens appropriés pour réaliser leur conditionnement, lesquels produits arrivent en ligne sur un premier convoyeur (2) d'alimentation qui a une fonction d'accumulation et une fonction de distribution desdits produits, laquelle distribution s'effectue de façon séquentielle pour alimenter un convoyeur (3) d'amenée qui met lesdits produits à disposition d'un collecteur (4) en vue de leur capture, lequel procédé consiste :
- à capter les produits répartis sur ledit convoyeur (3) d'amenée au moyen dudit collecteur (4) en forme de peigne à alvéoles (5) superposées, lequel collecteur (4) est disposé transversalement par rapport au sens longitudinal d'avancement desdits produits sur ledit convoyeur (3) d'amenée, et ce collecteur est mobile dans un plan vertical,
- à déposer les produits, qui viennent d'être captés, au niveau d'un poste (10) de prise en charge qui se situe au-dessus du niveau dudit convoyeur (3) d'amenée,
**caractérisé en ce qu'**il consiste :
- à animer ledit collecteur (4) d'un mouvement en boucle, cyclique, qui comprend plusieurs phases : une phase de capture, une phase de dépose et une phase de retour, ladite phase de capture se décompose en un mouvement vertical de montée et un mouvement longitudinal d'avance opposé au sens d'avancement dudit convoyeur (3) d'amenée des produits et ladite phase de retour se décompose en un mouvement longitudinal dans le sens d'avance dudit convoyeur (3) d'amenée des produits et un mouvement vertical de descente,
- à déclencher ladite phase de capture des produits en prenant en compte des informations comme la position desdits produits sur ledit convoyeur (3) d'amenée par rapport audit collecteur (4) et, selon le cas, la vitesse dudit convoyeur (3) d'amenée,
- à organiser la phase de dépose par une opération de vidange de l'ensemble des produits formant le lot qui se trouve dans le collecteur (4) et par une opération simultanée de transfert de cette vidange sur une sole (11) d'accueil où ledit lot prend la forme d'une pile de produits.

2. Procédé de groupage de produits empilables selon la revendication 1, **caractérisé en ce qu'**il consiste à garnir le convoyeur (3) d'amenée puis à l'arrêter pendant au moins le temps de capture de tout ou partie de la quantité de produits qu'il porte.

3. Procédé de groupage de produits empilables selon la revendication 1, **caractérisé en ce qu'**il consiste à capter les produits à la volée sur un convoyeur (3) d'amenée qui est gavé de façon continue par le convoyeur (2) d'alimentation et qui avance lui-même de façon continue avec les produits à capter.

4. Procédé de groupage de produits empilables selon la revendication 1, **caractérisé en ce qu'**il consiste :
- à détecter la présence d'un produit en amont du collecteur (4),
- à arrêter le convoyeur (3) d'amenée dès que le premier produit a été capté par ledit collecteur (4),
- à déplacer le collecteur (4) verticalement et ensuite longitudinalement pour réaliser la capture de chaque produit suivant et, après la capture du dernier produit disposé en amont dudit convoyeur (3) d'amenée,
- à ramener ledit collecteur (4) vers l'aval dudit convoyeur (3) d'amenée,
- à entraver, sur le parcours retour, le passage desdits produits captés, au moyen d'une structure disposée au poste (10) de prise en charge, laquelle structure comprend une sole (11) et un dosseret (12) qui constitue une entrave sur le parcours du collecteur, lesquels produits captés s'empilent sur ladite sole (11), retenus par ledit dosseret (12), simultanément au mouvement de retour dudit collecteur (4),
- à remettre le convoyeur (3) d'amenée en mouvement pour le charger à nouveau avec les nouveaux produits à capter.

5. Procédé de groupage de produits empilables selon la revendication 1, **caractérisé en ce qu'**il consiste à capter les produits à la volée sur un convoyeur (3) d'amenée qui avance de façon continue avec les produits, lequel procédé consiste, après la dernière capture de produits sur le convoyeur (3) d'amenée.
- à déplacer verticalement puis horizontalement le collecteur (4) pour amener ses produits capturés au niveau du poste (10B) de prise en charge, puis,
- à amener une entrave sur le parcours retour dudit collecteur (4) en association avec ledit poste (10 B) de prise en charge, et
- à mettre ledit collecteur (4) en mouvement de retour dans le sens d'avancement dudit convoyeur (3) d'amenée, lequel mouvement provoque, sous action de ladite entrave, une vidange automatique dudit collecteur (4), et
- à animer ledit collecteur (4) d'un mouvement retour à une vitesse qui est supérieure à celle dudit convoyeur (3) d'amenée pour remonter la file de produits disposés sur ce dernier, et pour reprendre la position de départ de capture desdits produits.

6. Procédé de groupage de produits empilables selon la revendication 1, **caractérisé en ce que**, après la capture des produits et le déplacement vertical du collecteur (4), pour ne pas entraver le passage des produits qui sont disposés sur le convoyeur (3) d'amenée, le procédé consiste :
- à amener ledit collecteur (4) entre un poste (10C) de prise en charge disposé latéralement et une structure de vidange en forme de peigne (14) complémentaire audit collecteur (4),
- à animer ladite structure de vidange d'un mouvement transversal, par rapport au mouvement longitudinal du collecteur, et pendant l'arrêt de ce dernier
- à transférer les produits captés vers ledit poste (10C) de prise en charge et,
- à remettre ledit collecteur à son point de départ pour capture de nouveaux produits.

7. Installation de groupage de produits empilables pour la mise en oeuvre du procédé selon la revendication 1, **caractérisée en ce qu'**elle comprend :
- un convoyeur (3) d'amenée de produits espacés,
- un collecteur (4), en forme de peigne, disposé transversalement par rapport audit convoyeur (3) d'amenée et mobile dans un plan vertical, lequel collecteur comporte des alvéoles (5) superposées et aménagées pour capter les produits les uns à la suite des autres,
- des moyens d'animation dudit collecteur (4) selon un mouvement vertical de montée et de descente,
- des moyens de déchargement desdites alvéoles (5) pour déposer la pile constituée de ces produits captés, à un poste (10) de prise en charge de ladite pile,
- ledit poste (10) de prise en charge est disposé à un niveau qui est supérieur à celui du plan du convoyeur (3) d'amenée des produits, et, associé à ce poste (10) de prise en charge, des moyens de déchargement dudit collecteur (4) sont prévus pour déposer lesdits produits captés sur une sole (11) dudit poste (10) de prise en charge, sous la forme d'une pile
**caractérisée en ce qu'**elle comporte :
- des moyens, en forme de glissières, pour guider ledit collecteur (4) dans un plan longitudinal vertical, selon un mouvement longitudinal d'avance qui est opposé au sens d'avancement dudit convoyeur (3) d'amenée et selon un mouvement de recul qui est dans le sens d'avance dudit convoyeur (3) d'amenée, et
- un convoyeur (2) d'alimentation faisant office de convoyeur d'accumulation et de distribution des produits à regrouper sur ledit convoyeur (3) d'amenée, ledit convoyeur (3) d'amenée étant animé d'une vitesse d'avance qui est supérieure à celle dudit convoyeur (2) d'alimentation pour générer, automatiquement, un espace entre les produits qui se suivent sur ledit convoyeur (3) d'amenée.

8. Installation de groupage de produits empilables selon la revendication 7, **caractérisée en ce que** ledit poste (10) de prise en charge des produits est situé sur le parcours retour du collecteur (4) et lesdits moyens de déchargement des alvéoles sont constitués d'un dosseret (12), lequel dosseret (12) entrave le parcours des produits lors dudit mouvement de retour dudit collecteur (4), lesquels produits se déposent automatiquement sur la sole (11) dudit poste (10) de prise en charge, sous la forme d'une pile de produits.

9. Installation de groupage de produits empilables selon la revendication 8, **caractérisée en ce que** ledit collecteur (4) est constitué d'un peigne qui circule entre deux convoyeurs (3) d'amenée des produits, lequel collecteur (4) capte les produits dans leur partie médiane centrale et dépose ces produits au poste (10) de prise en charge qui est constitué de deux soles (11) disposées chacune respectivement au-dessus desdits convoyeurs (3) d'amenée et les produits reposent, par leurs extrémités, sur chaque sole (11).

10. Installation de groupage de produits empilables selon la revendication 8, **caractérisée en ce que** lesdits moyens de déchargement du collecteur (4) sont disposés au niveau du poste (10) de prise en charge, constitués d'une paire de dosserets (12) qui entravent le passage des produits lors du mouvement retour dudit collecteur (4), lequel collecteur (4) passe entre les deux dosserets (12) et entre les deux soles (11), laissant les produits au niveau dudit poste (10) de prise en charge, sous la forme d'une pile apte à être prélevée par des moyens appropriés du genre robots ou autres.

11. Installation de groupage de produits empilables selon la revendication 7, **caractérisée en ce que**, pour le cas de produits qui sont disposés en travers sur un convoyeur (3) d'amenée unique, ledit collecteur (4) est constitué de deux peignes disposés de part et d'autre de ce convoyeur (3) d'amenée, pour capter les produits au niveau de leurs extrémités, lesdits produits étant transportés au moyen dudit convoyeur (3) d'amenée au niveau de leur partie centrale médiane.

12. Installation de groupage de produits empilables selon la revendication 11, **caractérisée en ce qu'**elle comprend, dans le cas d'un collecteur (4) comportant deux peignes qui encadrent le convoyeur (3) d'amenée des produits, un poste (10) de prise en charge disposé au-dessus du niveau des produits situés sur ledit convoyeur (3) d'amenée, sur le parcours retour dudit collecteur (4), lequel poste (10) de prise en charge comprend
- une sole (11) disposée au-dessus et dans l'alignement dudit convoyeur (3) d'amenée des produits et
- des moyens de déchargement dudit collecteur (4) constitués d'un dosseret (12) associé à ladite sole (11), lequel dosseret (12) entrave le passage des produits captés, sur le parcours retour du collecteur (4), lesquels produits se déposent au niveau de leur partie centrale, sur ladite sole (11), sous la forme d'une pile de produits.

13. Installation de groupage de produits empilables selon la revendication 11, **caractérisée en ce que** lesdits peignes sont portés par des bras (8) qui sont espacées d'une distance D supérieure à la dimension des produits, dans leur sens transversal, tel qu'ils sont portés par ledit convoyeur (3) d'amenée.

14. Installation de groupage de produits empilables selon la revendication 13, **caractérisée en ce qu'**elle comprend un poste (10B) de prise en charge qui est disposé au niveau de la partie amont du convoyeur (3) d'amenée, pour accueillir les produits captés avant le mouvement retour dudit collecteur (4) vers le point de départ.

15. Installation de groupage de produits empilables selon la revendication 14, **caractérisée en ce que** le poste (10B) de prise en charge comprend une sole (11) disposée au-dessus du convoyeur (3) d'amenée et des moyens de déchargement constitués d'une palette (13) amovible qui constitue une entrave pour les produits sur le chemin de retour dudit collecteur (4), laquelle palette (13) est mobile dans un plan vertical entre une position inactive qui permet le passage des produits lors du mouvement de remonté de la file, jusqu'au niveau du poste (10B) de prise en charge, et une position active dans laquelle ladite palette (13)se positionne entre les deux peignes, en face de la partie centrale des produits pour décharger ledit collecteur (4).

16. Installation de groupage de produits empilables selon la revendication 11, **caractérisée en ce qu'**elle comprend un poste (10C) de prise en charge qui est disposé dans la partie amont du convoyeur (3) d'amenée, décalé latéralement par rapport au trajet du collecteur (4) et ce poste (10C) de prise en charge coopère avec des moyens de déchargement dudit collecteur (4) qui sont constitués d'un dispositif (14) en forme de peigne, complémentaire aux peignes dudit collecteur (4), lequel dispositif (14) est animé d'un mouvement transversal par rapport au mouvement dudit collecteur (4) pour transférer les produits disposés dans les alvéoles dudit collecteur (4) sur la sole (11) dudit poste (10C) de prise en charge qui est disposée latéralement, permettant un retour au point de départ du collecteur (4) dès l'éjection des produits portés par ce dernier.

## Patentansprüche

1. Verfahren zum Zusammenfassen von stapelbaren etuiartigen Produkten, Platten oder anderen für eine Übernahme durch geeignete Mittel, um ihre Verpackung auszuführen, wobei die Produkte in einer Reihe auf einem ersten Beschiclcungsförderer (2) mit einer Produktsammlungs- und einer Produktverteilungsfunktion eintreffen, wobei die Verteilung in sequenzieller Weise erfolgt, um einen Zuführungsförderer (3) zu beschicken, der die Produkte zwecks ihrer Aufnahme einem Sammler (4) bereitstellt, wobei das Verfahren ulnfasst:
- die auf dem Zuführungsförderer (3) verteilten Produkte mit Hilfe Sammlers (4), der die Form eines Kammes mit übereinanderliegenden Zellen (5) aufweist, aufzunehmen, wobei der Sammler (4) quer zur Längsvorschubrichtung der Produkte auf dem Zuführungsförderer (3) angeordnet und in einer vertikalen Ebene beweglich ist,
- die aufgenommenen Produkte in Höhe einer Übernalimestelle (10), die sich oberhalb der Höhe des Zuführungsförderers (3) befindet, abzulegen,
**dadurch gekennzeichnet, dass** es umfasst:
- den Sammler (4) in eine zyklische Schleifenbewegung zu versetzen, die mehrere Phasen umfasst: eine Aufnahmephase, eine Ablagephase und eine Rückfuhrungsphase, wobei sich die Aufzahmephase aus einer vertikalen Hubbewegung und einer längsgerichteten Vorschubbewegung entgegen der Vorschubrichtung des Produktzuführungsförderers (3) zusammensetzt und sich die Rückführungsphase aus einer längsgerichteten Bewegung in der Vorschubrichtung des Produktzuführungsförderers (3) und einer vertikalen Senkbewegung zusammensetzt,
- die Produktaufnalunephase unter Berücksichtigung von Informationen wie der Position der Produkte auf dem Zuführungsförderer (3) in Bezug auf den Sammler (4) und gegebenenfalls der Geschwindigkeit des Zuführungsförderers (3) auszulösen,
- die Ablagephase durch einen Vorgang der Leerung aller Produkte, welche die im Sammler (4) befindliche Charge ausbilden, und durch einen gleichzeitigen Vorgang des Transfers dieser Leerung auf einen Aufnahmeträger (11), wo die Charge die Form eines Produktstapels annimmt, zu bewerkstelligen.

2. Verfahren zum Zusammenfassen von stapelbaren Produkten nach Anspruch 1, **dadurch gekennzeichnet, dass** es umfasst, den Zuführungsförderer (3) zu bestücken und ihn anschließend zumindest während der Dauer der Aufnahme einiger oder aller darauf befindlichen Produkte anzuhalten.

3. Verfahren zum Zusammenfassen von stapelbaren Produkten nach Anspruch 1, **dadurch gekennzeichnet, dass** es umfasst, die Produkte verzögerungsfrei von einem Zuführungsförderer (3) aufzunehmen, der kontinuierlich vom Beschickungsforderer (2) beladen wird und der sich selbst mit den aufzunehmenden Produkten kontinuierlich vorwärtsbewegt.

4. Verfahren zum Zusammenfassen von stapelbaren Produkten nach Anspruch 1, **dadurch gekennzeichnet, dass** es umfasst:
- das Vorhandensein eines dem Sammler (4) vorgelagerten Produktes zu erkennen,
- den Zuführungsförderer (3) anzuhalten, sobald das erste Produkt vom Sammler (4) aufgenommen wurde,
- den Sammler (4) in vertikaler Richtung und anschließend in Längsrichtung zu bewegen, um die Aufnahme jedes folgenden Produktes vorzunehmen, und, im Anschluss an die Aufnahme des letzten dem Zuführungsförderer (3) vorgelagerten Produktes,
- den Sammler (4) zum nachgelagerten Bereich des Zuführungsförderers (3) zurückzuführen,
- auf dem Rückweg den Durchgang der aufgenommenen Produkte mittels einer an der Übernahmestelle (10) angeordneten Struktur zu verhindern, wobei die Struktur einen Träger (11) und ein Rückenteil (12), das ein Hindernis auf dem Weg des Sammlers bildet, umfasst, wobei sich die aufgenommenen Produkte gleichzeitig zur Rückbewegung des Sammlers (4) auf dem Träger (11) stapeln und vom Rückenteil (12) zurückgehalten werden,
- den Zuführungsförderer (3) wieder in Bewegung zu setzen, um ihn erneut mit neuen aufzunehmenden Produkte zu beladen.

5. Verfahren zum Zusammenfassen von stapelbaren Produkten nach Anspruch 1, **dadurch gekennzeichnet, dass** es umfasst, die Produkte verzögerungsfrei von einem Zuführungsförderer (3) aufzunehmen, der sich mit den Produkten kontinuierlich vorwärtsbewegt, wobei das Verfahren nach der letzten Aufnahme von Produkten vom Zuführungsförderer (3) umfasst:
- den Sammler (4) in vertikaler und anschließend horizontaler Richtung zu bewegen, um seine aufgenommenen Produkte in Höhe des Übernahmepostens (10B) zu bringen, anschließend
- auf dem Rückweg des Sammlers (4) ein Hindernis anzuordnen, das in Verbindung mit dem Übernahmeposten (10B) steht, und
- den Sammler in der Vorschubrichtung des Zuführungsförderers (3) in Rückbewegung zu versetzen, wobei die Bewegung unter Einwirkung des Hindernisses die automatische Leerung des Sammlers (4) bewirkt, und
- den Sammler (4) mit einer höheren Geschwindigkeit als der des Zuführungsförderers (3) zurückzubewegen, um zum Anfang der auf Letzterem angeordneten Produktreihe autzusehließen und wieder die Ausgangsposition zur Produktaufnahme einzunehmen.

6. Verfahren zum Zusammenfassen von stapelbaren Produkten nach Anspruch 1, **dadurch gekennzeichnet, dass** das Verfahren nach der Aufnahme der Produkte und der vertikalen Bewegung des Sammlers (4) zwecks Vertneidung, dass der Durchgang der auf dem Zuführungsförderer (3) angeordneten Produkte behindert wird, umfasst:
- den Sammler (4) zwischen eine seitlich angeordnete Übernahmestelle (10C) und eine zum Sammler (4) komplementäre kammförmige Leerungsstruktur (14) zu führen,
- die Leerungsstruktur in eine zur Längsbewegung des Sammlers quergerichtete Bewegung zu versetzen und, während sich Letzterer im Stillstand befindet,
- die aufgenommenen Produkte zur Übernahmestelle (10C) zu transferieren und
- den Sammler zu seinem Ausgangspunkt zur Aufnahme neuer Produkte zurückzubewegen.

7. Anlage zum Zusammenfassen von stapelbaren Produkten zur Umsetzung des Verfahrens nach Anspruch 1, **dadurch gekennzeichnet, dass** sie Folgendes umfasst:
- einen Förderer (3) zum Zuführen beabstandeter Produkte,
- einen kammförmigen Sammler (4), der quer zum Zuführungsförderer (3) und in einer vertikalen Ebene beweglich angeordnet ist, wobei der Sammler übereinanderliegende Zellen (5) umfasst, die gestaltet sind, um die Produkte nacheinander aufzunehmen,
- Mittel, um den Sammler (4) in eine vertikale Hub- und Senkbewegung zu versetzen,
- Mittel zum Entladen der Zellen (5), um den aus den aufgenommenen Produkten gebildeten Stapel an einer Stapelübernahmestelle (10) abzuladen,
- wobei die Übernahmestelle (10) in einer Höhe angeordnet ist, die sich oberhalb der Ebene des Produktzuführungsförderers (3) befindet, wobei Mittel zum Entladen des Sammlers (4) vorgesehen sind, und mit der Übernahmestelle (10) verbunden sind, um die aufgenommenen Produkte in Form eines Stapels auf einem Träger (11) abzuladen,
**dadurch gekennzeichnet, dass** sie Folgendes umfasst:
- schienenförmige Mittel, um den Sammler (4) in einer vertikalen Längsebene in eine längsgerichtete Vorschubbewegung entgegen der Vorschubrichtung des Zufuhrförderers (3) und in eine Rückzugsbewegung in Vorschubrichtung des Zuführungsförderers (3) zu versetzen, und
- einen Beschickungsförderer (2), der als Förderer zum Sammeln und Verteilen der auf dem Zufühnmgsförderer (3) anzuordnenden Produkte dient, wobei der Zuführtingsförderer (3) mit einer höheren Vorschubgeschwindigkeit als der des Beschickungsförderers (2) bewegt wird, um automatisch einen Abstand zwischen den auf dem Zuführungsförderer (3) aufeinanderfolgenden Produkten zu erzeugen.

8. Anlage zum Zusammenfassen von stapelbaren Produkten nach Anspruch 7, **dadurch gekennzeichnet, dass** sich die Produktübernahmestelle (10) auf dem Rückweg des Sammlers (4) befindet und die Mittel zum Entladen der Zellen ein Rückenteil (12) umfassen, wobei das Rückenteil (12) den Durchgang der Produkte während der Rückbewegung des Sammlers (4) behindert, wobei die Produkte automatisch in Form eines Produktstapels auf dem Träger (11) der Übernahmestelle (10) abgelegt werden.

9. Anlage zum Zusammenfassen von stapelbaren Produkten nach Anspruch 8, **dadurch gekennzeichnet, dass** der Sammler (4) einen Kamm umfasst, der sich zwischen zwei Produktzufuhrförderern (3) bewegt, wobei der Sammler (4) die Produkte in ihrem zentralen Mittelbereich aufnimmt und an der Übernahmestelle (10) ablädt, die aus zwei Trägern (11) ausgebildet ist, die jeweils oberhalb der Zufuhrförderer (3) angeordnet sind, und wobei die Produkte mit ihren Enden auf jedem Träger (11) liegen.

10. Anlage zum Zusammenfassen von stapelbaren Produkten nach Anspruch 8, **dadurch gekennzeichnet, dass** die Mittel zum Entladen des Sammlers (4) in Höhe der Übernahmestelle (10) angeordnet und aus zwei Rückenteilen (12) ausgebildet sind, die den Durchgang der Produkte bei der Rückbewegung des Sammlers (4) verhindern, wobei sich der Sammler (4) zwischen den beiden Brückenteilen (12) und den beiden Trägern (11) hindurchbewegt und die Produkte in Höhe der Übernahmestelle (10) in Form eines Stapels, der von geeigneten roboterartigen Mitteln oder anderen aufgenommen werden kann, zurücklässt.

11. Anlage zum Zusammenfassen von stapelbaren Produkten nach Anspruch 7, **dadurch gekennzeichnet, dass** im Fall von Produkten, die quer auf einem einzelnen Zuführungsförderer (3) angeordnet sind, der Sammler (4) aus zwei Kämmen ausgebildet ist, die auf beiden Seiten des Zuführungsförderers (3) angeordnet sind, um die Produkte in Höhe ihrer Enden aufzunehmen, wobei die Produkte mit Hilfe des Zuführungsförderers (3) in Höhe ihres zentralen Mittelbereichs transportiert werden.

12. Anlage zum Zusammenfassen von stapelbaren Produkten nach Anspruch 11, **dadurch gekennzeichnet, dass** sie im Fall eines Sammlers (4) mit zwei Kämmen, die den Produktzuführungsförderer (3) einrahmen, eine Übernahmestelle (10) umfasst, die oberhalb der Höhe der Produkte, die sich auf dem Rückweg des Sammlers (4) auf dem Zuführungsförderer (3) befinden, angeordnet ist, wobei die Übernahmestelle (10) Folgendes umfasst:
- einen Träger (11), der oberhalb und in der Flucht des Produktzuführungsförderers (3) angeordnet ist, und
- Mittel zum Entladen des Sammlers (4), die ein mit dem Träger (11) verbundenes Rückenteil (12) umfassen, wobei das Rückenteil (12) den Durchgang der aufgenommenen Produkte auf dem Rückweg des Sammlers (4) verhindert, wobei die Produkte in Form eines Produktstapels in Höhe ihres zentralen Teils auf dem Träger abgelegt werden.

13. Anlage zum Zusammenfassen von stapelbaren Produkten nach Anspruch 11, **dadurch gekennzeichnet, dass** die Kämme von Armen (8) getragen werden, die durch einen Abstand D beabstandet sind, der größer als die Abmessung der Produkte in ihrer Quertichtung sind, sodass sie vom Zuführungsförderer (3) getragen werden.

14. Anlage zum Zusammenfassen von stapelbaren Produkten nach Anspruch 13, **dadurch gekennzeichnet, dass** sie eine Übernahmestelle (10B) umfasst, die in Höhe des vorgelagerten Bereichs des Zazführungsförderers (3) ist, um die aufgenommenen Produkte vor der Rückbewegung des Sammlers (4) zum Ausgangspunkt entgegenzunehmen.

15. Anlage zum Zusammenfassen von stapelbaren Produkten nach Anspruch 14, **dadurch gekennzeichnet, dass** die Übernahmestelle (10B) einen oberhalb des Zuführungsförderers (3) angeordneten Träger (11) und Mittel zum Entladen umfasst, die aus einer beweglichen Palette (13) ausgebildet sind, die für die Produkte ein Hindernis auf dem Rückweg des Sammlers (4) bildet, wobei die Palette (13) in einer vertikalen Ebene zwischen einer inaktiven Position, die den Durchgang der Produkte während der Aufschlussbewegung entlang der Reihe bis zur Höhe der Übernahmestelle (10B) ermöglicht, und einer aktiven Position, in der sich die Palette (13) zum Entladen des Sammlers (4) zwischen den beiden Kämmen gegenüber dem Mittelbereich der Produkte positioniert, bewegbar ist.

16. Anlage zum Zusammenfassen von stapelbaren Produkten nach Anspruch 11, **dadurch gekennzeichnet, dass** sie eine Übernahmestelle (10C) umfasst, die im vorgelagerten Bereich des Zuführungsförderers (3) angeordnet und in Bezug auf den Weg des Sammlers (4) seitlich versetzt ist, wobei die Übernahmestelle (10C) mit Mitteln zum Entladen des Sammlers (4) zusammenwirkt, die eine zum Sammler (4) komplementäre kammförmige Vorrichtung (14) umfassen, wobei die Vorrichtung in eine zur Bewegung des Sammlers quergerichtete Bewegung versetzt wird, um die in den Zellen des Sammlers (4) angeordneten Produkte auf den seitlich angeordneten Träger (11) der Übernahmestelle (10C) zu transferieren, wodurch der Sammler (4) zum Ausgangspunkt zurückgeführt werden kann, sobald die von diesem transportierten Produkte ausgestoßen wurden.

## Claims

1. Method for grouping stackable products of the cases, small plates or other type, so that they can be taken up by appropriate means in order to carry out their packaging, said products arriving in line on a first feed conveyor (2) which has an accumulation function and a distribution function of said products, said distribution being carried out sequentially in order to feed a supply conveyor (3) which makes said products available to a collector (4) so that they can be collected, which method consisting in:
- collecting the products distributed on said supply conveyor (3) by means of said collector (4) in the form of a comb with superimposed cells (5), said collector (4) being arranged transversally in relation to the longitudinal direction of advancing of said products on said supply conveyor (3), and this collector is mobile in a vertical plane,
- in depositing the products, which have just been collected, on a take-up station (10) which is located above the level of said supply conveyor (3),
**characterized in that** it consists:
- in providing said collector (4) with a loop movement, cyclical, which comprises several phases: a collecting phase, a depositing phase and a return phase, said collecting phase can be divided into a vertical rising movement and a longitudinal movement for advancing opposite to the direction of advancement of said supply conveyor (3) of products and said return phase can be divided into a longitudinal movement in the direction of advancement of said supply conveyor (3) of products and a vertical descending movement,
- in triggering said collecting phase of the products by taking into account information such as the position of said products on said supply conveyor (3) in relation to said collector (4) and, according to the case, the speed of said supply conveyor (3),
- in organising the depositing phase by an operation of emptying of all of the products forming the batch which is located in the collector (4) and by a simultaneous operation of transferring this emptying on a receiving slider bed (11) where said batch takes the form of a stack of products.

2. Method for grouping stackable products according to claim 1, **characterised in that** it consists in furnishing the supply conveyor (3) then in stopping it for at least the collecting time for all or a portion of the quantity of products that it is carrying.

3. Method for grouping stackable products according to claim 1, **characterised in that** it consists in collecting the products on the fly on a supply conveyor (3) which is continuously over-supplied by the feed conveyor (2) and which itself advances continuously with the products to be collected.

4. Method for grouping stackable products according to claim 1, **characterised in that** it consists: - in detecting the presence of a product upstream of the collector (4), - in stopping the supply conveyor (3) as soon as the first product has been collected by said collector (4), - in displacing the collector (4) vertically and then longitudinally in order to carry out the collecting of each following product and, after the collecting of the last product arranged upstream of said supply conveyor (3), - in bringing said collector (4) downstream of said supply conveyor (3), - in obstructing, on the return travel, the passing of said collected products, by means of a structure arranged in the take-up station, said structure comprising a slider bed (11) and a backrest (12) which forms an obstruction on the path of the collector, said collected products being stacked on said slider bed (11), stopped by said backrest (12) simultaneously to the return movement of said collector (4), in putting the supply conveyor (3) back into movement in order to load it again with the products to be collected.

5. Method for grouping stackable products according to claim 1, **characterised in that** it consists in collecting the products on the fly on a supply conveyor (3) which advances continuously with the products, which method consists, after the last collecting of products on the supply conveyor (3), in vertically and then horizontally displacing the collector (4) in order to supply its collected products at the take-up station (10B), then in supplying an obstruction on the return path of said collector (4) in association with said take-up station (10B), and in setting said collector (4) into return movement in the direction of advancement of said supply conveyor (3), which movement provokes an automatic emptying of said collector (4), under the action of said obstruction, and in providing said collector (4) with a return movement at a speed that is greater than that of said supply conveyor (3) in order to go back up the queue of products arranged on the latter and return to its departure position of collecting said products.

6. Method for grouping stackable products according to claim 1, **characterised in that**, after the collecting of products and the vertical displacement of the collector (4), in order to not obstruct the passing of the products which are arranged on the supply conveyor (3), the method consisting: - in supplying said collector (4) between a take-up station (10C) arranged laterally and a structure for emptying in the form of a comb (14) complementary to said collector (4), - in providing said structure for emptying with a transversal movement, in relation to the longitudinal movement of the collector, and during the stoppage of the latter, - in transferring the collected products towards said take-up station (10C) and - in putting said collector back in its point of departure for collecting new products.

7. Installation for grouping stackable products for the implementation of the method according to claim 1, **characterised in that** it comprises:
- a supply conveyor (3) for supplying spaced products;
- a collector (4), in the form of comb, arranged transversally in relation to said supply conveyor (3) and mobile in a vertical plane, which collector comprises superimposed cells (5) arranged for collecting the products one after the other,
- means for moving said collector (4) in a vertical rising and descending movement,
- means for unloading said cells (5) for depositing the stack made of these collected products at a take-up station (10) for taking-up said stack,
- said take-up station (10) is arranged at a level which is greater than that of the plane of the supply conveyor (3) of the products, and, associated to this take-up station (10), a means for unloading of said collector (4) in order to deposit said products collected on a slider bed (11) of said take-up station (10), in the form of a stack,
**characterized in that** it includes:
- means, in the form of slide rails, for guiding said collector (4) in a vertical longitudinal plane, according to an advancing longitudinal movement which is opposite to the direction of advancement of said supply conveyor (3) and according to a return movement which is in the direction of advancement of said supply conveyor (3), and
- a feed conveyor (2) acting as an accumulation and distribution conveyor of the products of be grouped together on said supply conveyor (3), said supply conveyor (3) advancing at a speed which is greater than that of said feed conveyor (2) in order to generate, automatically, a space between the products, which follow each other on said supply conveyor.

8. Installation for grouping stackable products according to claim 7, **characterised in that** said take-up station (10) of the products which is located on the return path of the collector (4) and said means of unloading of the cells are comprised of a backrest (12), which backrest (12) obstructs the travel of the products during said return movement of said collector (4), said products being deposited automatically on the slider bed (11) of said take-up station (10), in the form of a stack of products.

9. Installation for grouping stackable products according to claim 8, **characterised in that** said collector (4) is constituted of a comb which circulates between two supply conveyors (3) of products, which collector (4) collecting the products in their central middle portion and depositing these products at the take-up station (10) which is constituted of two slider beds (11) arranged each respectively above said supply conveyors (3) and the products rest on each slider bed (11), on their ends.

10. Installation for grouping stackable products according to claim 8, **characterised in that** said means of unloading of the collector (4) are arranged on the take-up station (10), and are constituted of a pair of backrests (12) which obstruct the passing of the products during the return movement of said collector (4), said collector (4) passing between the two backrests (12) and between the two slider beds (11), leaving the products on said take-up station (10), in the form of a stack able to be picked up by appropriate means of the robot or other type.

11. Installation for grouping stackable products according to claim 7, **characterised in that**, for the case of products which are arranged crosswise on a single supply conveyor (4), said collector (4) is comprised of two combs arranged on either side of this supply conveyor (3), in order to collect the products on their ends, said products being transported by means of said supply conveyor (3) on their central middle portion.

12. Installation for grouping stackable products according to claim 11, **characterised in that** it comprises, in the case of a collector (4) comprising two combs which frame the supply conveyor (3) of the products, a take-up station (10) arranged above the level of products located on said supply conveyor (3), on the return path of said collector (4), said take-up station (10) comprising - a slider bed (11) arranged above and in the alignment of said supply conveyor (3) of products and - means of unloading of said collector (4) comprised of a backrest (12) associated to said slider bed (11), which backrest (12) obstructing the passing of the collected products, on the return path of the collector (4), which products being deposited on their central portion, on said slider bed (11), in the form of a stack of products.

13. Installation for grouping stackable products according to claim 11, **characterised in that** said combs are carried by arms (8) which are spaced at a distance D which is greater than the dimension of the products, in their transversal direction, such as they are carried by said supply conveyor (3).

14. Installation for grouping stackable products according to claim 13, **characterised in that** it comprises a take-up station (10B) which is arranged on the upstream portion of the supply conveyor (3), in order to receive the collected products before the return movement of said collector (4) towards the point of departure.

15. Installation for grouping stackable products according to claim 14, **characterised in that** the take-up station (10B) comprises a slider bed (11) arranged above the supply conveyor (3) and means of unloading comprised of a moveable pallet (13) which constitutes an obstruction for the products on the return path of said collector (4), which pallet (13) being mobile in a vertical plane between an inactive position which allows for the passing of the products during the movement of going back up the queue, until the take-up station (10B), and an active position wherein said pallet (13) is positioned between the two combs, across from the central portion of the products in order to unload said collector (4).

16. Installation for grouping stackable products according to claim 11, **characterised in that** it comprises a take-up station (10C) which is arranged in the upstream portion of the supply conveyor (3), shifted laterally in relation to the path of the collector (4) and this take-up station (10C) interacts with means of unloading of said collector (4) which are comprised of a device (14) in the form of a comb, complementary to the combs of said collector (4), said device (14) being capable of a transversal movement in relation to the movement of said collector (4) in order to transfer the products arranged in the cells of said collector (4) on the slider bed (11) of said take-up station (10C) which is arranged laterally, making possible a return to the point of departure of the collector (4) as soon as the products carried by the latter are ejected.
